# EUROPEAN PATENT APPLICATION

(11) **EP 4 436 257 A1**
(43) Date of publication of application: **25.09.2024**
(21) Application number: 24150325.9
(22) Date of filing: 04.01.2024
(51) Int. Cl.: H04W 36/00

(54) **APPARATUSES AND METHODS FOR SUSPENDING MEASUREMENT REPORTING**

(30) Priority: 23.03.2023 FI 20235343
(71) Applicant: Nokia Technologies Oy, 02610 Espoo (FI)
(72) Inventor: HÖHNE, Hans Thomas, Helsinki (FI); RANASINGHE MUDIYANSELAGE, Vismika Maduka, Oulu (FI); ALI, Amaanat, Espoo (FI)
(74) Representative: Nokia EPO representatives

(57) **Abstract**

Example embodiments enable suspending measurement reporting based on predictions or measurements performed by a client node. A client node comprises at least one processor, and at least one memory comprising instructions which, when executed by the at least one processor, cause the client node at least to receive, from a network node, one or more measurement configuration messages of downlink measurements comprising at least one variable accessible by the client node for defining a suspend state of at least some of the associated downlink measurements or measurement reports; determine to set or unset the suspend state based on characteristics of at least one of predicted or measured downlink measurements performed by the client node; check, before sending a measurement report to the network, if the associated suspend state is set or unset; and send the measurement report to the network node if the suspend state is unset. Devices and methods are disclosed.

## Description

### TECHNICAL FIELD

The present application generally relates to wireless technology. Some example embodiments of the present application relate to improving measurement reporting based on at least one of prediction or measurement-based techniques performed by a client node.

### BACKGROUND

In mobility management in 5G NR (5^{th} generation new radio), there is an increased number of measurements for network management including handover and beam switching. Hence, there is a need for improvements in managing data collection.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments may enable optimizing data collection in wireless systems. This may be achieved by the features of the independent claims. Further implementation forms are provided in the dependent claims, the description, and the drawings.

According to a first aspect, a client node may comprise at least one processor, and at least one memory comprising instructions which, when executed by the at least one processor, cause the client node at least to receive, from a network node, one or more measurement configuration messages of downlink measurements comprising at least one variable accessible by the client node to define a suspend state for the associated downlink measurements or measurement reports; set or unset the suspend state based on characteristics of at least one of predicted or measured downlink measurements by the client node; check, before sending a measurement report to the network, if the associated suspend state is set or unset; and send the measurement report to the network node if the suspend state is unset.

According to an example embodiment of the first aspect, the measurement report may comprise a measurement prediction report.

According to an example embodiment of the first aspect, the measurement configuration message may comprise a measurement identity linking a measurement object with a report configuration for reporting the downlink measurements, and the suspend state is associated to the measurement identity.

According to an example embodiment of the first aspect, the at least one variable may be specific to a cell or a beam, and the at least one memory comprises instructions which, when executed by the at least one processor, cause the client node at least to detect that measurement reporting associated with the measurement identity is triggered for more than one cell or beam; and set or unset the suspend state for the respective cells or beams.

According to an example embodiment of the first aspect, the memory may comprise instructions which, when executed by the at least one processor, cause the client node at least to predict downlink measurements within a prediction time window based on the measurement configuration message; and determine the suspend state based on a predicted measurement event.

According to an example embodiment of the first aspect, the measurement configuration message may comprise information on one or more measurement events configured for at least one of setting or unsetting the suspend state, and the suspend state is set or unset according to a measurement event triggered based on the characteristics.

According to an example embodiment of the first aspect, the measurement configuration message may comprise an additional report configuration indicating the one or more measurement events configured for at least one of setting or unsetting the suspend state.

According to an example embodiment of the first aspect, the one or more measurement events may be associated to different measurement identities than the suspend state.

According to an example embodiment of the first aspect, the measurement configuration message may further comprise information on one or more report configurations configured for at least one of setting or unsetting the suspend state, and the suspend state is set or unset based on the characteristics indicating that reporting according to one of the report configurations has triggered.

According to an example embodiment of the first aspect, the measurement configuration message is configured for suspending periodic, semi-persistent or measurement triggered reporting.

According to a second aspect, a network node may comprise at least one processor, and at least one memory comprising instructions which, when executed by the at least one processor, cause the network node at least to send, to a client node, a measurement configuration message for downlink measurements comprising at least one variable accessible by the client node to define a suspend state for the associated downlink measurements or measurement reports.

According to an example embodiment of the second aspect, the measurement configuration message comprises information on a suspendable measurement event based on a measurement identity linking a measurement object with a first report configuration, the suspend state is associated to the measurement identity, the measurement configuration message further comprises information on one or more measurement events configured for at least one of setting or unsetting the suspend state by the client node, and the measurement events configured to set or unset the suspend state are associated to a same measurement identity or different measurement identities than the suspend state.

According to an example embodiment of the second aspect, the measurement configuration message comprises an additional report configuration indicating the one or more measurement events configured to at least one of setting or unsetting the suspend state.

According to an example embodiment of the second aspect, the measurement configuration message comprises information on one or more report configurations configured for at least one of setting or unsetting the suspend state by the client node.

According to a third aspect, a method may comprise receiving, by a client node from a network node, one or more measurement configuration messages of downlink measurements comprising at least one variable accessible by the client node to define a suspend state for the associated downlink measurements or measurement reports; setting or unsetting the suspend state based on characteristics of at least one of predicted or measured downlink measurements by the client node; checking, by the client node, if the associated suspend state is set or unset before sending a measurement report to the network; and sending, by the client node, the measurement report to the network node if the suspend state is unset.

According to an example embodiment of the third aspect, the measurement configuration message may comprise a measurement identity linking a measurement object with a report configuration for reporting the downlink measurements, and the suspend state is associated to the measurement identity.

According to an example embodiment of the third aspect, the at least one variable may be specific to a cell or a beam, and the method comprises causing the client node to detect that measurement reporting associated with the measurement identity is triggered for more than one cell or beam; and setting or unsetting the suspend state for the respective cells or beams.

According to an example embodiment of the third aspect, the method comprises causing the client node to predict downlink measurements within a prediction time window based on the measurement configuration message; and determining the suspend state based on a predicted measurement event.

According to an example embodiment of the third aspect, the measurement configuration message may comprise information on one or more measurement events configured for at least one of setting or unsetting the suspend state, and the suspend state is set or unset according to a measurement event triggered based on the characteristics.

According to an example embodiment of the third aspect, the measurement configuration message may comprise an additional report configuration indicating the one or more measurement events configured for at least one of setting or unsetting the suspend state.

According to an example embodiment of the third aspect, the one or more measurement events may be associated to different measurement identities than the suspend state.

According to an example embodiment of the third aspect, the measurement configuration message may further comprise information on one or more report configurations configured for at least one of setting or unsetting the suspend state, and the suspend state is set or unset based on the characteristics indicating that reporting according to one of the report configurations has triggered.

According to an example embodiment of the third aspect, the measurement configuration message is configured for suspending periodic, semi-persistent or measurement triggered reporting.

According to a fourth aspect, a method may comprise sending, by a network node to a client node, a measurement configuration message for downlink measurements comprising a variable accessible by the client node to define a suspend state for the associated downlink measurements or measurement reports.

According to an example embodiment of the fourth aspect, the measurement configuration message comprises information on a suspendable measurement event based on a measurement identity linking a measurement object with a first report configuration, the suspend state is associated to the measurement identity, the measurement configuration message further comprises information on one or more measurement events configured for at least one of setting or unsetting the suspend state by the client node, and the measurement events configured to set or unset the suspend state are associated to a same measurement identity or different measurement identities than the suspend state.

According to an example embodiment of the fourth aspect, the measurement configuration message comprises an additional report configuration indicating the one or more measurement events configured to at least one of setting or unsetting the suspend state.

According to an example embodiment of the fourth aspect, the measurement configuration message comprises information on one or more report configurations configured for at least one of setting or unsetting the suspend state by the client node.

According to a fifth aspect, a computer program may be configured, when executed by a processor, to cause an apparatus at least to perform the following: receive, from a network node, one or more measurement configuration messages of downlink measurements comprising at least one variable accessible by the client node to define a suspend state for the associated downlink measurements or measurement reports; set or unset the suspend state based on characteristics of at least one of predicted or measured downlink measurements by the client node; check, before sending a measurement report to the network, if the associated suspend state is set or unset; and send the measurement report to the network node if the suspend state is unset. The computer program may further comprise instructions for causing the apparatus to perform any example embodiment of the method of the third aspect.

According to a sixth aspect, an apparatus may comprise means for receiving, from a network node, one or more measurement configuration messages of downlink measurements comprising at least one variable accessible by the client node to define a suspend state for the associated downlink measurements or measurement reports; setting or unsetting the suspend state based on characteristics of at least one of predicted or measured downlink measurements by the client node; checking, before sending a measurement report to the network, if the associated suspend state is set or unset; and sending the measurement report to the network node if the suspend state is unset. The apparatus may further comprise means for performing any example embodiment of the method of the third aspect.

According to a seventh aspect, a computer program may comprise instructions for causing an apparatus to perform at least the following: send, to a client node, a measurement configuration message for downlink measurements comprising at least one variable accessible by the client node to define a suspend state for the associated downlink measurements or measurement reports. The computer program may further comprise instructions for causing the apparatus to perform any example embodiment of the method of the fourth aspect.

According to an eighth aspect, an apparatus may comprise means for sending, to a client node, a measurement configuration message for downlink measurements comprising at least one variable accessible by the client node to define a suspend state for the associated downlink measurements or measurement reports. The apparatus may further comprise means for performing any example embodiment of the method of the fourth aspect.

Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate example embodiments and together with the description help to explain the example embodiments. In the drawings:
FIG. 1 illustrates an example of a network comprising network nodes and a client node according to an example embodiment.
FIG. 2 illustrates an example of a machine learning enabled function of a user equipment according to an example embodiment;
FIG. 3 illustrates an example of an apparatus configured to practice one or more example embodiments;
FIG. 4 illustrates an example of determining a suspend state of a measurement event based on a prediction by user equipment, according to an example embodiment;
FIG. 5 illustrates an example of determining a suspend state of a measurement event based on other measurement events, according to an example embodiment;
FIG. 6 illustrates an example of a flow chart of reporting process of a suspendable measurement event according to an example embodiment;
FIG. 7 illustrates an example of a message sequence chart for measurement report suspension according to an example embodiment;
FIG. 8 illustrates an example of a suspend state specific to a channel state information reporting configuration according to an example embodiment;
FIG. 9 illustrates an example of a method for measurement report suspension according to an example embodiment; and
FIG. 10 illustrates a method for configuring suspendable measurement reporting according to an example embodiment.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present examples may be constructed or utilized. The description sets forth the functions of the example and a possible sequence of operations for constructing and operating the example. However, the same or equivalent functions and sequences may be accomplished by different examples.

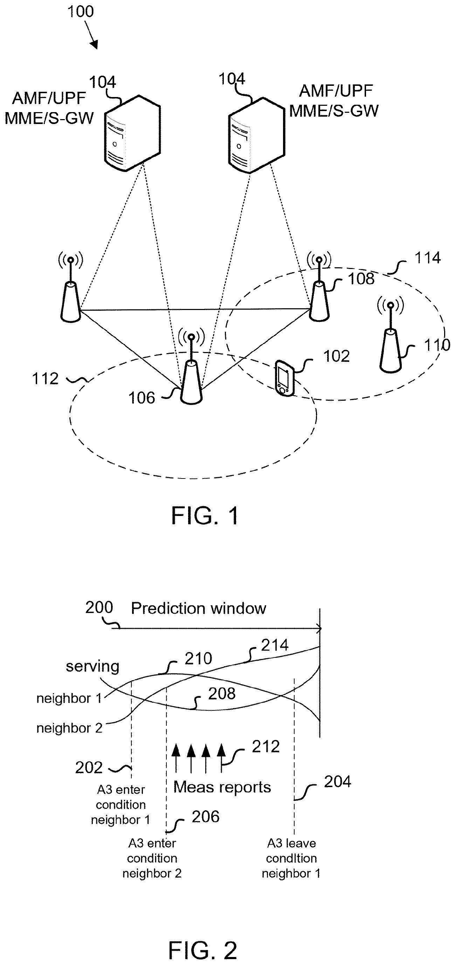

FIG. 1 illustrates an example embodiment of a network 100. The network 100 may comprise one or more core network elements 104. The core network elements 104 may for example comprise one or more access and mobility management Functions (AMF) and/or user plane functions (UPF), for example in accordance with the 3GPP 5G-NR (3rd Generation Partnership Project 5G New Radio) standard. Alternatively, or additionally, the core network elements 104 may comprise one or more mobility management entities (MME) and/or serving gateways (S-GW), for example in accordance with the 3GPP LTE (Long Term Evolution) standard. The network 100 may further comprise at least one client node, which may be also referred to as a user node, user device or user equipment (UE) 102. The UE 102 may communicate with one or more base stations 106, 108, 110 over wireless radio channel (s) . Base stations may be also called radio access network (RAN) nodes, or network nodes. In general, a base station may comprise any suitable radio access point. For example, The UE 102 may be configured to communicate with a 5G node, gNB, and/or a 4G node, eNB. Communications between the UE 102 and base stations 106, 108, 110 may be bidirectional. Hence, any of the devices may be configured to operate as a transmitter and/or a receiver.

The network nodes may be associated with respective coverage areas 112, 114. When UE 102 moves from coverage area 108 to coverage area 110, network 100 may be configured to perform handover from a source network node, such as base station 106, to a target network node, such as base station 108, or another prepared target network node.

The network nodes may be configured to communicate with the core network elements 104 over a communication interface, such as for example control plane or user plane interface NG-C/U of the 5G system or an X2 interface of the 4G E-UTRAN (Evolved Universal Terrestrial Radio Access Network). Functionality of a network node may be distributed between a central unit (CU), for example a gNB-CU, and one or more distributed units (DU), for example one or more gNB-DUs. Network elements such as eNB, gNB, gNB-CU, and gNB-DU, AMF, UPF, MME, or S-GW may be generally referred to as network nodes or network devices. Although depicted as a single device, a network node may not be a stand-alone device. Instead, a network node may for example comprise a distributed computing system coupled to a remote radio head. For example, a cloud radio access network (cRAN) may be applied to split control of wireless functions to optimize performance and cost.

The network 100 may be configured for example in accordance with the 5th Generation digital cellular communication network, as defined by the 3rd Generation Partnership Project (3GPP). In one example, the communication network 100 may operate according to 3GPP 5G-NR. It is however appreciated that example embodiments presented herein are not limited to this example network and may be applied in any present or future wireless or wired communication networks, or combinations thereof, for example other type of cellular networks, short-range wireless networks, broadcast or multicast networks, or the like.

Various signaling information may be exchanged in network 100 to provide information related to transmission parameters and allocation of radio resources for data transmission. Signaling information may be provided on various levels of a protocol stack.

The network 100 may be configured to control mobility of the UE 102 based on measurement reports from the UE 102. The measurement reports may be associated to beam or cell measurements. For non-LTM mobility (LTM, lower layer triggered mobility), the UE 102 may be configured to send measurement reports as RRC (radio resource control) messages. The non-LTM mobility may comprise, for example, baseline handover (BHO) or conditional handover (CHO).

RRC may refer to provision of radio resource related control data. Radio resource control messages may be transmitted on various logical control channels such as for example a common control channel (CCCH) or a dedicated control channel (DCCH). Logical control channels may be mapped to one or more signaling radio bearers (SRBs).

Although some example embodiments are described using particular RRC messages as examples, it is appreciated that any suitable message(s) may be configured to carry measurement report or handover related signaling information described herein. Even though some example embodiments have been described using the 4G and/or 5G networks as examples, it is appreciated that example embodiments presented herein are not limited to these example networks and may be applied in any present or future communication networks, for example other type of cellular networks, short-range wireless networks, broadcast networks, or the like.

The network 100 may be configured to perform mobility decisions on whether a UE will be handover or not based on measurement reports from the UE. The measurements may comprise, for example, RSRP (reference signal received power), RSRQ (reference signal received quality) or SINR (signal to interference and noise ratio) for measuring signal quality of a serving cell and neighbor cells. The measurements may be periodic, or triggered by measurement events. The triggering measurement events may be based on predefined measurement report types. The measurement event(s) may be specified by RRC signaling message sent by a base station to the UE.

Examples of measurement events comprise event A1, wherein a serving cell becomes better than a threshold, event A2, wherein a serving cell becomes worse than a threshold, event A3, wherein a neighbor cell becomes offset better than a special cell, event A4, wherein neighbor becomes better than a threshold, event A5, wherein special cell becomes worse than a first threshold and neighbor cell becomes better than a second threshold, event A6, wherein neighbor becomes offset better than a secondary cell, event B1, wherein inter RAT neighbor becomes better than a threshold, and event B2, wherein primary cell becomes worse than a first threshold and inter RAT neighbor becomes better than a second threshold. However, possible events for triggering measurement reports are not limited to the example list. The UE may be configured to measure serving cell and neighbors to report and validate quantity with the threshold or offset defined in reporting configuration. The report quantity/the trigger for event can be RSRP, RSRQ or SINR, for example.

The network 100 may configure the UE 102 based on configuration messages comprising one or more information elements. For example, an information element specifying a list of measurement identity (ID) to be added or modified may be configured to the UE 102 by a base station (e.g., MeasIdToAddMod IE). Each entry in the list may link a measurement ID to a measurement object ID and reporting configuration ID. A measurement object ID may define measured object cell. A reporting configuration ID may define measurement and report criteria according to associated reporting configuration. A reporting configuration may describe how reporting should happen. The reporting may be configured to performed, for example, periodically. Alternatively, the reporting may be configured to trigger by an event.

Thus, for a given measurement ID, the UE 102 may be configured to perform a measurement on the measurement object it refers to based on the measurement object ID and apply criteria provided in the corresponding reporting configuration. By configuring multiple measurement identities, it is possible to link more than one measurement object to the same reporting configuration, as well as to link more than one reporting configuration to the same measurement object. The UE 102 may be configured by the network 100 to report measurements for up to N measurement IDs, where N is UE capability.

For example, in NR, a measurement object may indicate frequency/time location as well as subcarrier spacing of reference signals to be measured. For example, for inter-RAT E-UTRA measurements, a measurement object may be a single E-UTRA carrier frequency.

In LTM, layer 1 (L1) measurement reports may be sent on the MAC protocol layer in periodic fashion. The measurement reports may be also sent, for example, in a semi-static or aperiodic fashion. A configuration of the measurement reports may be delivered to the UE via an RRC message including a channel state information reporting configuration (e.g., IE CSI-ReportConfig). The information element on the RRC message may be used to configure a periodic or semi-persistent report sent by the UE on PUCCH (physical uplink control channel) on the cell in which the RRC message is included, or to configure a semi-persistent or aperiodic report sent on PUSCH (physical uplink shared channel) triggered by DCI (downlink control information) received on the cell in which the CSI reporting configuration is included, e.g., the cell on which the report is sent is determined by the received DCI. The RRC message may comprise a channel state information report configuration ID configured to identify one CSI reporting configuration.

As discussed, a UE may be configured to perform measurement reporting for measurement events that are configured by the network. However, for such measurement reporting, the UE may report a set of measurement events when the measurement event has been met, i.e., the measurement reporting may be about the present pertaining to a measurement event that is met in the immediate past, for example. Delay in the reporting may be due to formatting a measurement report and finding a UL slot to physically transmit the report, for example.

In addition, the network 100 may be configured to make predictions by augmenting mobility functions in the network with a machine learning (ML) enabled function. For example, the network 100 may comprise a ML model configured to predict a set of target cells that the UE 102 is most likely to handover to, allowing the network to initiate preparation of handover command to the UE 102 based on the prediction. Hence, mobility performance may be improved. For example, number of successful handovers may be improved and possible radio link failures due to late handover may be avoided. Using such ML model by the UE 102, the UE 102 may be configured to forecast downlink measurements. For example, with handover prediction, the UE 102 may be configured to determine whether to transmit or suspend measurement reports. Hence, the predictions performed by the UE and linked to rule-based control (e.g., based on HO measurement triggers), unnecessary signaling and data collection may be reduced. The determination may be based on a network configured suspend state variable specific to a measurement identity.

For example, the ML enabled function in the UE 102 may be configured to make a forecast in a future period of time, as illustrated in FIG. 2. The future period of time may be referred to as a prediction time window 200. In this example, the network may have configured an A3 event trigger for the UE, used by the network to perform HO of the UE from a source cell to a given target cell. For example, after a trigger condition 202 is met, such as when a neighbor RSRP (reference signal received power) measurement 210 is offset better than of the serving cell 208, and after TTT (time-to-trigger) has elapsed and the trigger condition is still true, the UE 102 may be configured to send measurement reports 212. The network may then decide how to react to the sent measurement reports. For example, the network may follow up with a baseline HO command or initiate a preparation for a conditional HO. The A3 event may comprise a leaving condition which may also trigger a measurement report from the UE 102. With the ML enabled function, the UE may have a capability to predict the A3 leaving condition 204 within the prediction window 200. By having both the normal A3 trigger 202 and the prediction of A3 events 204, it may be possible to take advantage of features enabled by the prediction while at the same time having a fallback mechanism in case predictions may not be relied on. For example, it may be possible to avoid unnecessary measurements on target cells where a configured measurement event may not likely be met, to reduce number of unnecessary handover preparation messages, and/or to reduce number of so-called ping-pongs, i.e., to not perform a HO that is unnecessary.

The prediction of a future A3 event (enter or leave condition) may be for instance carried out as follows: First a prediction of a RSRP sequence is carried out. A ML model used for the prediction may comprise, for example, an artificial neural network.

As an example, the neural network may comprise type of convolutional or recurrent neural networks or long-term short-term (LSTM) networks. For instance, a ML model may be comprising 2 layers of Conv2D (2D convolution layer) networks or LSTM networks, followed by 2 layers of dense (densely connected neurons) networks. The model may be trained offline, online at the UE, or the model may be trained by the network and provided to the UE.

The ML model may use as input a sequence of past RSRP measurements of a beam, for several beams. The sequence of past measurements may comprise for instance 20 samples, where samples may have been collected every 20 msec. The ML model may for instance use 6 beams as input. Thus, in the example, there may be 20*6 samples spanning a past window of 400 msec used as input. The output of the ML model may be a sequence of RSRP values, wherein for each input beam sequence there is one output beam sequence. Hence, the ML model can be considered carrying out a type of regressive prediction. Any type of sequence prediction may be used.

In a second step, the predicted RSRP sequence may be fed to a parser configured to extract future A3 events.

In some situations, multiple events can be triggered for the same measurement identity. For instance, if two cells matching the measurement object come into view of the UE, two A3 events (e.g., A3 enter conditions for neighbor 1 202 and for neighbor 2 206) may be triggered for the measurement identity. The cells neighbor 1 and 2 may be added to a UE variable measurement report list (e.g., varMeasReportList) and configured to be reported under the same measurement identity. The verMeasReportList may include information about the measurements for which the triggering conditions have been met.

In case of the window prediction in FIG. 2, the A3 leave condition 204 may be predicted for neighbor 1, but not for neighbor 2. This highlights that the suspend state can be made cell-specific. Therefore, for the measurement identity a suspend state list may be created by the UE, with entries indexed with corresponding cell ID which the UE may be configured to report. The entries may be populated as described in this disclosure - by other events, or by other actors in the UE such as a ML model. The UE may be configured to report measurements only for those cells for which the suspend state is not set based on the list. For example, based on the predictions of FIG. 2, suspend states for the neighbor 1 and neighbor 2 may be added to the list of suspend states. Further, the UE may be configured to set the suspend state of neighbor 1 due to the predicted leaving condition while the suspend state for neighbor 2 may be unset because there is no triggering leaving condition for that cell based on predicted RSRP measurements 210 of the serving cell and 214 of the neighbor 2.

One advantage of the proposed method may be in reducing the size of the measurement report which is sent from the UE to the network. As explained, the report can contain several beams or cells. By suspending some of the beam or cell reports their measurements are removed from the report that is sent to the network. Further, the reduced reporting may enable reduced energy consumption.

In addition, the network may be configured to indicate one or more cells which shall not be suspendable. The cells configured not to be suspendable may be for instance cells that have been observed to have many radio link failures. The cells indicated not to be suspendable may also be per cell pair, such as a source-neighbor cell pair.

In one embodiment the method may be applied not only for suspending measurement reports, but for suspending measurement prediction reports. As of now, measurement prediction reporting is not standardized, but its efficient reporting options are discussed within 3GPP. A measurement prediction report may contain predicted beam or cell measurements of one or more beams or cells. The introduced suspend state and triggers for setting and clearing the suspend state for a beam can be applied also to selected beams in the predicted measurement reporting, thereby reducing the report size (which is sent from the UE to the network).

An objective of this disclosure is to improve data collection by using prediction and measurement-based techniques, for example in connection with event-based decisions. The event-based decision may comprise, for example, handover measurements. An example embodiment may enable co-existence of conventional HO trigger (e.g. A3) with a ML based HO trigger with HO event prediction. Further, a fallback mechanism is provided, for example, in case ML performance is degraded, allowing to suspend the ML process-based decision when needed. For example, measurement reports may be unsuspended based on actual measurements associated with a predicted beam, or based on measurements associated with a different beam.

An example embodiment may enable flexible UE behavior with respect to performing measurements and measurement reporting in a prediction window based on a proposed signaling between the UE and network. The proposed method may allow network defined events, such as A3 or A5 events, to be used for performing suspension and/or unsuspension of reporting. The (un)suspension may be based on a suspend state variable, which may be specific to a measurement identity. Measurement reporting procedures performed by a UE may be configured to verify the measurement suspension state before sending out reports to the network. The suspend state may be a variable maintained by a UE, similarly as TTT timer or counter used to count number of radio link failures.

Further, the suspend state may be specific to a cell ID or beam ID. If one measurement identity triggers reporting for more than one cell, the suspend states for the cells may form a list for this measurement identity configured to guide reporting decisions of the UE.

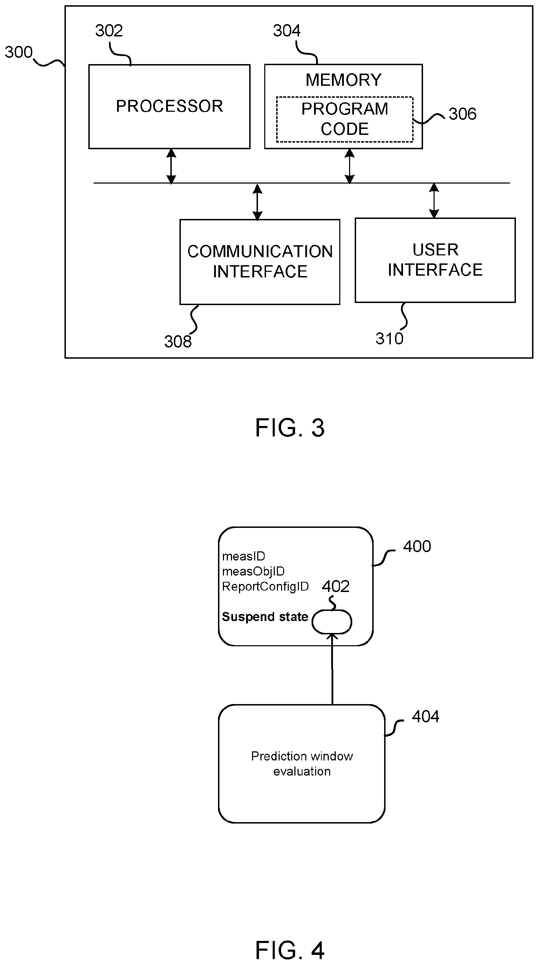

FIG. 3 illustrates an example embodiment of an apparatus 300, for example a client node such as UE 102, or a network node such as a base station 106. The apparatus 300 may comprise at least one processor 302. The at least one processor may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus 300 may further comprise at least one memory 304. The memory 304 may be configured to store, for example, computer program code or the like, for example operating system software and application software. The memory 304 may comprise one or more volatile memory devices, one or more non-volatile memory devices, and/or a combination thereof. For example, the memory may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.).

The apparatus 300 may further comprise a communication interface 308 configured to enable the apparatus 300 to transmit and/or receive information, for example signaling information or data packets to/from other devices. In one example, the apparatus 300 may use communication interface 308 to transmit or receive signaling information and data in accordance with at least one cellular communication protocol. The communication interface may be configured to provide at least one wireless radio connection, such as for example a 3GPP mobile broadband connection (e.g. 3G, 4G, 5G). However, the communication interface may be configured to provide one or more other type of connections, for example a wireless local area network (WLAN) connection such as for example standardized by IEEE 802.11 series or Wi-Fi alliance; a short range wireless network connection such as for example a Bluetooth, NFC (near-field communication), or RFID connection; a wired connection such as for example a local area network (LAN) connection, a universal serial bus (USB) connection or an optical network connection, or the like; or a wired Internet connection. The communication interface 208 may comprise, or be configured to be coupled to, at least one antenna to transmit and/or receive radio frequency signals. One or more of the various types of connections may be also implemented as separate communication interfaces, which may be coupled or configured to be coupled to a plurality of antennas.

The apparatus 300 may further comprise a user interface 310 comprising an input device and/or an output device. The input device may take various forms such a keyboard, a touch screen, or one or more embedded control buttons. The output device may for example comprise a display, a speaker, a vibration motor, or the like.

When the apparatus 300 is configured to implement some functionality, some component and/or components of the apparatus 300, such as for example the at least one processor 302 and/or the memory 304, may be configured to implement this functionality. Furthermore, when the at least one processor 302 is configured to implement some functionality, this functionality may be implemented using program code 306 comprised, for example, in the memory 304.

The apparatus 300 may comprise for example a computing device such as for example a base station, a server, a mobile phone, a tablet computer, a laptop, an internet of things (IoT) device, or the like. Examples of IoT devices include, but are not limited to, consumer electronics, wearables, sensors, and smart home appliances. In one example, the apparatus 300 may comprise a vehicle such as for example a car. Although the apparatus 300 is illustrated as a single device it is appreciated that, wherever applicable, functions of the apparatus 300 may be distributed to a plurality of devices, for example to implement example embodiments as a cloud computing service.

For example, a client node may be configured to receive, from a network node, a measurement configuration message comprising a suspend state variable for suspending associated measurement reporting. The suspend state may be associated, for example, to a specific measurement identity or reporting configuration. The client node may further comprise one or more functions configured to set and unset the suspend state. The functions may be based on at least one of a ML model configured to predict downlink measurements or configured measurement events. The functions may be configured to evaluate characteristics of predicted or measured downlink measurements and cause the suspend state to be set or unset based on the evaluation. The network node may be configured to send one or more measurement configuration messages to the client node. The measurement configuration messages may comprise information on at least one of suspendable measurement reporting comprising the suspend state variable or measurement events configured for setting or unsetting the suspend state by the client node.

The functionality described herein may be performed, at least in part, by one or more computer program product components such as software components. According to an embodiment, the apparatus 300 comprises a processor 302 or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus 300 may comprise means for performing at least one method described herein. In one example, the means comprises the at least one processor 302, the at least one memory 304 including instructions which, when executed by the at least one processor 302, cause the apparatus 300 to perform the method.

FIG. 4 illustrates an example of determining a suspend state for a measurement event by based on a prediction by user equipment, according to an example embodiment. The UE may be configured to set or unset the suspend state, for example, by one or more internal ML models of the UE 404.

The UE may be configured to receive an information element from a base station, for example, with a measurement configuration message. The IE may indicate a measurement event 400 with suspendable measurement reporting. For example, the IE may comprise a measurement identity linking a measurement object with report configuration of the suspendable measurement event and the associated suspend state variable 402. The one or more ML models may be configured to predict a possible set of target cells the UE may handover to. For example, the ML models may be configured to at least one of set the suspend state 402 based on one or more first predetermined criterion and unset the suspend state based on one or more second predetermined criterion associated with the suspendable measurement event. The first criterion may be, for example, prediction of a leaving condition of a A3 event, and the second criterion may comprise prediction that the leaving condition is not met. The UE may be configured to evaluate the predetermined criteria within a prediction window and based on the evaluation determine to set or unset the suspend state 402.

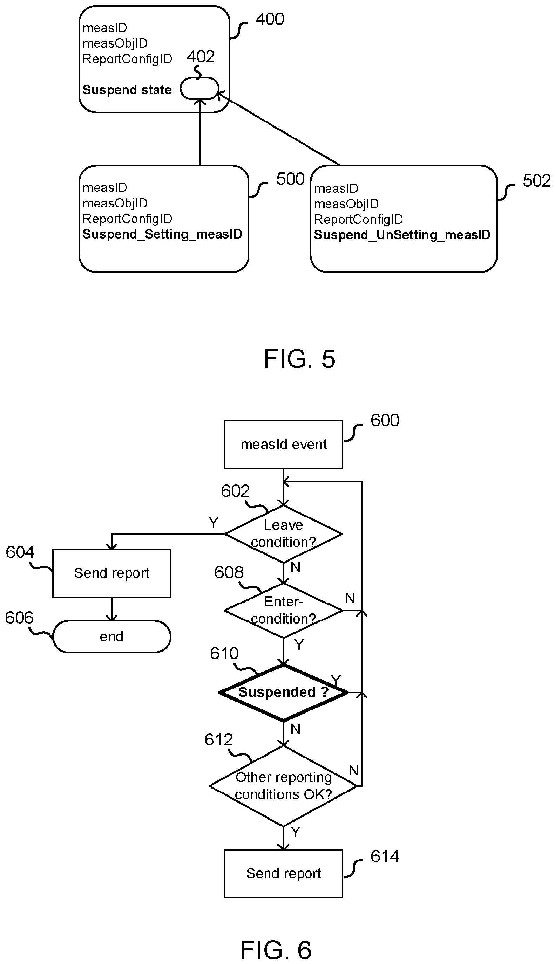

FIG. 5 illustrates an example of determining a suspend state 402 for a measurement event based on one or more other measurement events, according to an example embodiment. In other words, the suspend state may be set or unset by the UE based on measurement events as triggers. The UE may have received from a network one or more measurement configuration messages indicating a measurement event with suspendable measurement reporting 400. The one or more measurement configuration messages may have further comprised at least one measurement event 500 configured for setting the suspend state 402 of the measurement event 400. The one or more measurement configuration messages may further comprise at least one measurement event 502 configured for unsetting the suspend state 402 of the measurement event 400. The measurement configuration message may comprise a measurement identity indicating a measurement object and report configuration associated with respective measurement event. The measurement events 500 and 502 may be associated to a different measurement identity than the measurement event 400. The measurement events 500, 502 may be linked to the measurement identity associated with the suspend state 402, for example, on a level of IE configuring a list of measurement identity additions or modifications received from a base station.

The triggers for determining the suspend state may be RRC defined. In addition, or alternatively, the method to set and/or unset the suspend state by the UE may be applicable to L1 measurement reporting, and the triggers may be defined on a MAC level. The suspend state variable may be made visible on the level of the L1 periodic reporting and evaluated by the UE before reports are sent out. Network control of the suspend state variable may be conceivable for LTM using, for example, MAC CEs or DCIs.

Similar to the ML model configured to set the suspend state of a measurement event, the measurement events setting the suspend state may be based on and evaluated by prediction models. Additionally, normal measurement event triggers, such as A2 event (serving becomes worse than threshold), may be used to unsuspend measurement reporting of other measurement events.

FIG. 6 illustrates an example of a flow chart of a reporting process of a suspendable measurement event with an additional check for a suspend state variable. At 600, a suspendable measurement event, such as A3, may have occurred. The suspendable measurement event may be defined by network based on a measurement configuration message sent to a UE. The measurement configuration message may have comprised at least a measurement identity of the measurement event and an associated suspend state variable.

At operation 602, the UE may be configured to determine if a leaving condition is met. If yes, the process may proceed to operation 604, and the UE is configured to send a measurement report based on the leaving condition. After the measurement report is sent, the process may end at operation 606. If the leaving condition is not met, the UE may be configured to determine if enter condition is met, at operation 608. If the enter condition is met, the UE may be configured to verify the suspend state at operation 610. The suspend state may be determined by the UE based on characteristics of predicted or performed downlink measurements, which may be associated with a same or a different beam/cell. If the suspend state is set, the UE may be configured to not send any associated measurement reports. If the suspend state is unset, the UE may be configured to check if other reporting conditions are met for sending the measurement report to the network. If yes, the UE may be configured to send the measurement report at operation 614.

The suspendable measurement event may be suspended at any time by the UE. The suspendable event may be suspended, for example, before an enter condition is met, after the enter condition is met, before a TTT has expired, after the TTT has expired, before a leaving condition is met, and/or after the leaving condition is met. The suspend state may be set (or unset) by the UE, according to a configuration by the network, such as based on measurement events configured to trigger setting the suspend state. The suspendable measurement event and the triggering measurement events may have different measurement identities.

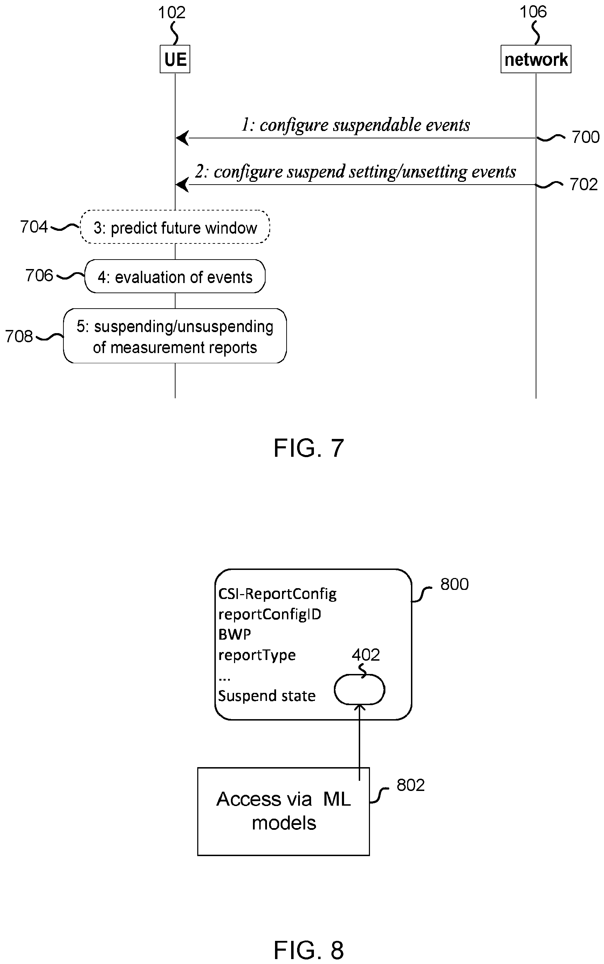

FIG. 7 illustrates an example of a message sequence chart for measurement report suspension, according to an example embodiment.

At 700, a network, such as a base station 106, may be configured to send one or more measurement configuration messages to a UE 102. The measurement configuration message may comprise information of suspendable measurement events. The information may comprise, for example, at least one measurement identity and one or more suspend state variables associated with the measurement identity. For example, a list of suspend state variables specific to cell or beam IDs may be provided in the one more measurement configuration messages. Alternatively, an "empty" list may be provided, and the UE may be configured to create entries to the list based on detected cells during measurements, for example.

At 702, the base station 106 may be configured to send to the UE 102 in the same, or in another, measurement configuration message information about measurement events for setting and/or unsetting the suspend state for measurement reporting. The suspend state variable(s) are accessible by the UE, and the UE may determine the suspend state at any time based on characteristics of predicted and/or performed downlink measurements by the UE and the configured measurement events.

Optionally, at 704, the UE 102 may be configured to perform a prediction by a ML model in a prediction window. The UE may be configured, for example, to perform sequence prediction of RSRPs. For example, the UE 102 may be configured to predict if an A3 event associated with the configured suspendable measurement event will occur and also if a leaving condition associated with the A3 event will be fulfilled within the prediction window.

At 706, the UE 102 may be configured to perform evaluation of measurement events. Based on the evaluation, the UE 102 may determine if measurement reports associated with the measurement event configured at 700 is triggered. In addition, or alternatively, the UE 102 may determine based on the evaluation to set or unset one or more of the suspend states associated with the measurement event configured at 700 based on any triggered measurement events configured at 702.

At 708, the UE 102 may check the suspend states. The configurations at 700 and 702 may dictate, for example, that the UE has suspended reporting for a cell for which the leave condition is predicted by setting the corresponding suspend state variable. The UE 102 may be configured to send to the base station 106 the triggered measurement reports of cells which are being unsuspended. If the measurement reports are suspended, they are not sent by the UE 102.

In an implementation form, the suspend state variable may be comprised in an information element defining a list of measurement identities to be added or modified. The suspend state may be specific to one measurement identity linking associated measurement object and a reporting configuration for downlink measurements. An event configured to at least one of set or unset the suspend state may be associated with another measurement identity. The list of measurement IDs to be added and/or modified may comprise a new element indicating the measurement ID which suspend state is set or unset. For example, the list may be in a following text form:

```
        measIdToAddModList {
    (measId=11,
    measObjId,
    reportConfigId,
    # suspended_state)
  
    (measId=12,
    measObjId,
    reportConfigId,
    measId_to_suspend=11)
  
    (measId=13,
    measObjId,
    reportConfigId,
    measId_to_unsuspend=11)
 }.
```

In the example list, measurement ID 12 and 13 may be configured to trigger suspension/unsuspension of measurement ID 11. A practical example would be when measurement ID 11 triggers A3 event used to trigger a handover between two cells. The A3 event could be suspended by a measurement event of measurement ID 12 containing an event A1, wherein a serving cell becomes better than a threshold. Further, the A3 event could be unsuspended by a measurement event of measurement ID 13 containing an event A2, wherein the serving cell becomes worse than a threshold. The suspend states may refer to cells for which trigger conditions were satisfied. The above list and events are only one example, and the list can have any suitable form and the events can be any events configured by the network. The measurements associated with the measurement ID 12 and/or 13 may comprise measurements predicted by the UE.

In an implementation form, the list of measurement IDs to be added or modified may be enhanced to hold not only a report configuration ID for a suspendable measurement event, but also report configuration IDs configured for setting and/or unsetting the suspend state. For example, the suspend state may be configured to be held in a corresponding UE variable list of measurement IDs to be added and/or modified information element. For example, the list may be in a following text form:

```
        measIdToAddModList {
    (measId=1,
    measObjId,
    reportConfigId,
    reportConfigIdList_suspend_setting_r19,
    reportConfigIdList_unsuspend_setting_r19,
    # suspend_state)
  
 (measId=2,
    measObjId,
    reportConfig_event_r16,
    )
 }.
```

The measId 1 may be configured, for example, for suspendable fallback reporting. The measId 2 may be configured for normal reporting, which may not be suspendable.

In the above example, the reportConfigIdList_suspend_setting may be a list of reporting configuration IDs. The suffix _r16 and _r19 may refer to a 3GPP specification release, wherein Rel-16 and Rel-19 are only one examples. Each reporting configuration ID (reportConfigId) may point to a reporting configuration. Each reporting configuration in the list may be evaluated by a UE. If the event of the report configuration is satisfied, the suspend state may be set by the UE. Likewise, the suspend state may be unset by the UE based on reporting configurations associated with a list of the reportConfigIdList_unsuspend_setting.

In an implementation form, the measurement events configured to set or unset the suspend state may be added to a new type of report configuration. For example, the list may be in a following text form:

```
        measIdToAddMod {
    (measId=1,
    measObjId,
    reportConfigId,
    suspend_state)
 }
  
 suspendableReportConfig_r19 {
    eventTriggerConfig_r16,
    eventTriggerConfig_suspend_setting_list_r19,
    eventTriggerConfig_unsuspend_setting_list_r19
 }.
```

When a measurement event comprised in a list configured to trigger setting of the suspend state (e.g., eventTriggerConfig_suspend_setting_list) is detected by the UE, the UE may be configured to set the suspend state of one or more configured suspendable measurement events. When a measurement event comprised in a list configured to trigger unsetting of the suspend state (e.g., eventTriggerConfig_unsuspend_setting_list) is detected by the UE, the UE may be configured to unset the suspend state of one or more configured suspendable measurement events.

In case of LTM, such as for L1 reporting, channel state information reporting configuration (e.g., IE CSI-ReportConfig) may be used. The CSI reporting configuration may be specific to a bandwidth part (BWP). Thus, it may not be used in conjunction with RRC measurement ID framework. The information element of CSI reporting configuration may be enhanced, for example, with a flag "suspendable". In the reporting procedure, it may then be specified that when the flag is configured, the reporting is conditional to the value of suspend state variable which may have been set for a reported beam or cell. The suspend states may be indexed with beam information, such as cell ID, TCI state, etc.

FIG. 8 illustrates an example of a suspend state 402 specific to a channel state information reporting configuration 800. The suspend state 402 may be set and/or unset, for example, by one or more ML models of the UE 802. The suspend state of the L1 reporting may be also configured to be set and/or unset by cell-level RRC events. The underlying idea is that L1 (beam-)reporting suspension may be unset by a fail-safe trigger of cell-level measurements. In that case, for example an information element with a list of measurement IDs to be added and/or modified associated with the RRC unsuspend-setting event may also comprise the CSI-ReportConfig identification to enable unsetting the associated suspend state.

Each reporting setting of the CSI reporting configuration may be associated with a single downlink BWP (for example, indicated by higher layer parameter BWP-Id) given in an associated CSI resource configuration for channel measurement and may contain parameter(s) for one CSI reporting band. The parameter(s) may comprise a codebook configuration including codebook subset restriction, time-domain behavior, frequency granularity for CQI (channel quality indicator) and PMI (precoding matrix indicator), measurement restriction configurations, and CSI-related quantities to be reported by the UE such as a layer indicator (LI), L1-RSRP, L1-SINR, CRI, and SSBRI (SSB resource indicator) and a capability index.

The time domain behavior of the CSI reporting configuration may be indicated by a higher layer parameter of report configuration type and can be set to aperiodic, semi-persistent on PUCCH, semi-persistent on PUSCH, or periodic. For periodic and semi-persistent on PUCCH or PUSCH CSI reporting, the configured periodicity and slot offset may apply in a numerology of an UL (uplink) BWP in which the CSI report is configured to be transmitted on. A higher layer parameter of report quantity may indicate CSI-related, L1-RSRP-related, L1-SINR-related or capability index-related quantities to report. A report frequency configuration may indicate reporting granularity in the frequency domain, including CSI reporting band and if PMI/CQI reporting is wideband or sub-band. A time restriction for channel measurements parameter in CSI reporting configuration may be configured to enable time domain restriction for channel measurements and time restriction for interference measurements can be configured to enable time domain restriction for interference measurements. The CSI reporting configuration can also contain codebook configuration, which may contain configuration parameters for Type-I, Type II, Enhanced Type II CSI, or Further Enhanced Type II Port Selection including codebook subset restriction when applicable, and configurations of group-based reporting.

The flag parameter of suspendable reporting in the CSI reporting configuration can be configured to enable verifying contents of a list of suspend state variables specific to the CSI reporting configuration. Initial value(s) of the list of suspend state variables may be set as false. The list may initially comprise a single suspend state variable, or a plurality of suspend state variables. An entry to the list containing a suspend state for a cell or beam may be configured to be set by ML models within the UE. For example, the ML model may be configured to set the suspend state variable from false to true based on channel information prediction, such as when predicted measurements approximately correspond to previous measurements. The list of suspend state variables may be verified every time when periodic reports are scheduled to be sent by the UE. If a suspend state variable for a beam or cell is found and it is set true, the UE may be configured to not send the associated periodic reports.

The ML model can be configured to set the suspend state variable as follows: In a first step the model may be configured to create a prediction of an RSRP sequence for a set of beams with a regression model, as described earlier. In a second step, the predicted RSRP sequence may be parsed for future A3 events. The parser may be configured to recognize two successive A3 events, corresponding to identifying two possible future HO target cells t1 and t2. Further the parser may be configured to recognize that the current serving cell could directly HO to t2 in the future, for example. Then measurement reports for cell t1 could be then suspended.

Advantages of example embodiments may comprise that measurement reports can be paused or suspended, for example, instead of simply cancelling measurement events based on prediction which may change later due to updates. Further, as unsuspension of the suspend state may be prediction independent, e.g., based on actual measurements of a predicted beam or based on measurements on a different beam, a more robust fail-safe mechanism may be provided to perform mobility procedures. For example, if a prediction causing the suspend state to be set was accurate, measurements can still be used for unsuspending to perform a mobility procedure. For example, when another beam than the predicted beam is detected to go below a threshold, or when another beam has deviation from earlier predictions, these occurred changes can be taken into account at any time after to change the suspend state. Robustness may be improved by having more than one mechanism available for determining the suspend state for measurement reports, such that the reports may be sent or suspended when needed, even if the suspend mechanism was somehow misconfigured. Different suspend state setting/unsetting configurations are provided (e.g., triggered measurement events associated to a first measurement identity may be configured to set or unset a suspend state associated to a second measurement identity). Further, the reporting may be suspended and unsuspended based on predictions, performed measurements, or both.

For the unsuspending operation, cell-specific as well as cell-unspecific unsuspend of reporting can be considered.

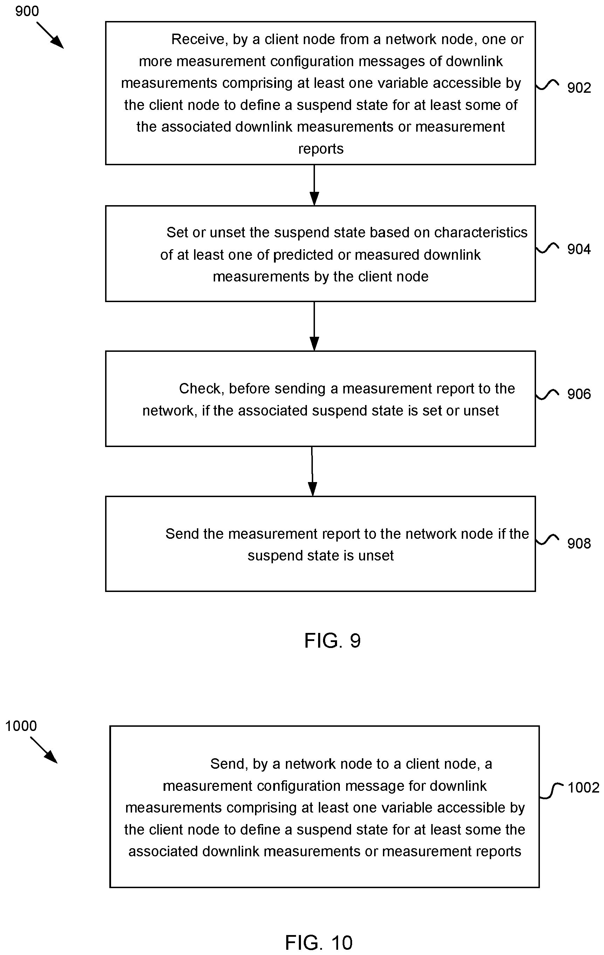

FIG. 9 illustrates an example of a method 900 for suspension of measurement reports, according to an example embodiment. The method may be performed, for example, by a user node such as a UE.

At 902, the method may comprise receiving from a network node, such as a base station, a measurement configuration message. The measurement configuration message may comprise at least one suspend state variable. The suspend state variable may be configured to indicate if at least some of the associated downlink measurements or measurement reports are suspended. The suspend state variable may be accessible by different functions of the user node. The different functions may comprise one or more internal ML models of the user node and/or measurements triggering an event. The measurements may be performed by the user node and associated with one or more base stations.

At 904, the method may comprise at least one of setting or unsetting the suspend state based on characteristics of at least one of predicted or measured downlink measurements by the client node.

At 906, the method may comprise checking the suspend state. The client node may be configured to check the suspend state before sending one or more associated reports to the network node.

At 908, the method may comprise sending the one or more measurement reports to the network node when the suspend state variable is unset.

FIG. 10 illustrates a method 1000 for configuring suspendable measurement reporting according to an example embodiment. The method may be, for example, by a network node such as a base station.

At 1002, the method may comprise sending, by the network node to a client node, a measurement configuration message for downlink measurements comprising at least one variable accessible by the client node to define a suspend state for at least some of the associated downlink measurements or measurement reports.

Further features of the methods directly result from the functionalities and parameters of the apparatuses, as described in the appended claims and throughout the specification and are therefore not repeated here. It is noted that one or more operations of the method may be performed in different order.

An apparatus, for example a network node, a user node or a client node, may be configured to perform or cause performance of any aspect of the method(s) described herein. Further, a computer program may comprise instructions for causing, when executed, an apparatus to perform any aspect of the method(s) described herein. Further, an apparatus may comprise means for performing any aspect of the method(s) described herein. According to an example embodiment, the means comprises at least one processor, and memory including program code, the at one memory and the program code configured to, when executed by the at least one processor, cause performance of any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

As used in this application, the term 'circuitry' may refer to one or more or all of the following: (a) hardware-only circuit implementations (such as implementations in only analog and/or digital circuitry) and (b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. A client node, comprising at least one processor; and at least one memory comprising instructions which, when executed by the at least one processor, cause the client node at least to:
receive, from a network node, one or more measurement configuration messages of downlink measurements comprising at least one variable accessible by the client node to define a suspend state for at least some of the associated downlink measurements or measurement reports;
set or unset the suspend state based on characteristics of at least one of predicted or measured downlink measurements by the client node;
check, before sending a measurement report to the network node, if the associated suspend state is set or unset; and
send the measurement report to the network node if the suspend state is unset.

2. The client node of claim 1, wherein the measurement report comprises a measurement prediction report.

3. The client node of claim 1 or 2, wherein the measurement configuration message comprises a measurement identity linking a measurement object with a report configuration for reporting the downlink measurements, and the suspend state is associated to the measurement identity.

4. The client node of any preceding claim, wherein the at least one variable is specific to a cell or a beam, and wherein the at least one memory comprises instructions which, when executed by the at least one processor, cause the client node at least to:
detect that measurement reporting associated with the measurement identity is triggered for more than one cell or beam; and
set or unset the suspend state for the respective cells or beams.

5. The client node of any preceding claim, wherein the memory comprises instructions which, when executed by the at least one processor, cause the client node at least to:
predict downlink measurements within a prediction time window based on the measurement configuration message; and
determine the suspend state based on a predicted measurement event.

6. The client node of any preceding claim, wherein the measurement configuration message comprises information on one or more measurement events configured for at least one of setting or unsetting the suspend state,
and wherein the suspend state is set or unset according to a measurement event triggered based on the characteristics.

7. The client node of claim 6, wherein the measurement configuration message comprises an additional report configuration indicating the one or more measurement events configured for at least one of setting or unsetting the suspend state.

8. The client node of claim 6, wherein the one or more measurement events are associated to different measurement identities than the suspend state.

9. The client node of any of claims 3 to 6, wherein the measurement configuration message further comprises information on one or more report configurations configured for at least one of setting or unsetting the suspend state,
and wherein the suspend state is set or unset based on the characteristics indicating that reporting according to one of the report configurations has triggered.

10. A network node, comprising at least one processor, and at least one memory including computer program code, the at least one memory and the computer code configured to, with the at least one processor, cause the network node at least to:
send, to a client node, a measurement configuration message for downlink measurements comprising at least one variable accessible by the client node to define a suspend state for at least some of the associated downlink measurements or measurement reports.

11. The network node of claim 10, wherein the measurement configuration message comprises information on a suspendable measurement event based on a measurement identity linking a measurement object with a first report configuration, and the suspend state is associated to the measurement identity,
wherein the measurement configuration message further comprises information on one or more measurement events configured for at least one of setting or unsetting the suspend state by the client node,
and wherein the measurement events configured to set or unset the suspend state are associated to a same measurement identity or different measurement identities than the suspend state.

12. The network node of claim 10 or 11, wherein the measurement configuration message comprises an additional report configuration indicating the one or more measurement events configured to at least one of setting or unsetting the suspend state.

13. The network node of any of claim 10 to 12, wherein the measurement configuration message comprises information on one or more report configurations configured for at least one of setting or unsetting the suspend state by the client node.

14. A method, comprising:
receiving, by a client node from a network node, one or more measurement configuration messages of downlink measurements comprising at least one variable accessible by the client node to define a suspend state for at least some of the associated downlink measurements or measurement reports;
setting or unsetting the suspend state based on characteristics of at least one of predicted or measured downlink measurements by the client node;
checking, by the client node, if the associated suspend state is set or unset before sending a measurement report to the network; and
sending, by the client node, the measurement report to the network node if the suspend state is unset.

15. A method, comprising:
sending, by a network node to a client node, a measurement configuration message for downlink measurements comprising at least one variable accessible by the client node to define a suspend state for at least some of the associated downlink measurements or measurement reports.
